# EUROPEAN PATENT SPECIFICATION

(11) **EP 1 599 543 B1**
(45) Date of publication and mention of the grant of the patent: **09.08.2006**
(21) Application number: 04716071.8
(22) Date of filing: 01.03.2004
(51) Int. Cl.: C08L 77/00, C08K 3/04

(54) **UV-STABILISED POLYAMIDE COMPOSITION**
UV-STABILISIERTE POLYAMIDZUSAMMENSETZUNG
COMPOSITION DE POLYAMIDE STABLE AUX UV

(30) Priority: 06.03.2003 NL 1022859
(43) Date of publication of application: 30.11.2005
(73) Proprietor: DSM IP Assets B.V., 2611 TE Heerlen (NL)
(72) Inventor: SOUR, Wilhelmus, Josephus, Maria, NL-6229 HP Maastricht (NL); SAMPERS, Jacobus, NL-6077 AH St. Odilienberg (NL)
(74) Representative: Krijgsman, Willem
(86) International application number: PCT/NL2004/000154
(87) International publication number: WO 2004/078847

(56) References cited:
- EP-A- 1 162 236
- WO-A-96/28503

## Description

The invention relates to a reinforced polyamide composition stabilised against weather influences.

Such a composition is known from EP 1,162,236. This document reveals a vehicle-mirror supporting part consisting of 30-90 parts by weight of a mixture of a crystalline and a non-crystalline polyamide and 10-70 parts by weight of a reinforcing material, in which a component has been included that improves the resistance against weather influences and also 0.2 to 5 parts by weight of carbon black. The carbon black has an aggregate particle size of between 65 and 85 nm. The aggregates in carbon black as a rule consist of multiple primary particles. If all aggregates were to consist of only two primary particles, the average size of such primary particles would be at most between 32.5 and 42.5 nm. In practice, however, there will occur not only aggregates of two particles but also those with three or more particles will occur in large numbers so that the average primary particle size will be well below 25 nm.

It has been found that such a composition possesses inadequate resistance to weather influences, in particular to the effects of UV rays, for a number of applications.

The object of the invention is to provide a polyamide composition with superior weather resistance and in particular better UV resistance than the known composition.

This object is attained according to the invention in that the composition comprises:
(a) 40 to 95 parts by weight of polyamide at least 50 wt% of which is semicrystalline polyamide;
(b) 5 to 60 parts by weight of reinforcing material;
(c) 0.05 to 4 parts by weight of at least of one organic UV stabiliser chosen from the class of hindered amines; and
(d) 0.1 to 5 parts by weight of carbon black with an average primary particle size of at least 30 nm.

The composition according to the invention has been found to have better weather resistance and in particular better UV resistance than a comparable composition in which the primary carbon black particles have an average size smaller than 30 nm.

The composition contains 40 to 95 parts by weight of a polyamide, preferably 50 to 90 parts by weight. This polyamide is at least 50 wt% semicrystalline polyamide. Suitable semicrystalline polyamides in the framework of the invention are for example aliphatic polyamides, for example PA-6, PA-11, PA-12, PA-4,6, PA-4,8, PA-4,10, PA-4,12, PA-6,6, PA-6,9, PA-6,10, PA-6,12, PA-10,10, PA-12,12, PA-6/6,6-copolyamide, PA-6/12-copolyamide, PA-6/11-copolyamide, PA-6.6/11-copolyamide, PA-6,6/12-copolyamide, PA-6/6,10-copolyamide, PA-6,6/6.10-copolyamide, PA-4,6/6-copolyamide, PA-6/6,6/6,10-terpolyamide and copolyamides formed from 1,4-cyclohexane dicarboxylic acid and 2,2,4- and 2,4,4-trimethyl hexamehtylene diamine, copolyamide formed from isophthalic acid, lauric lactam and 3,5-dimethyl-4,4-diaminodicyclohexyl methylene, copolyamides formed from isphthalic acid, heptanedicarboxylic acid and/or octane dicarboxylic acid and 4,4-diaminodicyclohexyl methane, copolyamides formed from caprolactam, isophthalic acid and/or terephthalic acid and 4,4-diaminodicyclohexyl methane, copolyamides formed from caprolactam, isophthalic acid and/or terephthalic acid and isophoron diamine, copolyamides formed from isophthalic acid and/or terephthalic acid and/or other aromatic or aliphatic dicarboxylic acids, optionally alkyl-substituted hexamethylene diamine and alkyl substituted 4,4-diaminodicyclohexylamine, and also copolyamides and mixtures of the aforesaid polyamides. Preferably, the semicrystalline polyamide is a PA 6, PA 66, PA 46 or a copolyamide thereof.

Besides the semicrystalline polyamide, the polyamide portion of the composition may contain at most 50 wt% non-crystalline polyamide. Suitable amorphous polyamides have a heat of fusion of at most 4.2 J/g, determined by means of Differential Scanning Calorimetry with a preheating rate of 16 °C/minute. Examples thereof are isophthalic acid/terephthalic acid/hexamethylene diamine/bis(3-methyl-4-aminocyclohexyl)methane polycondensate, terephthalic acid/2,2,4-trimethylhexamethylenediamine/2,4,4-trimethylhexamethylenediamine polycondensate, isophthalic acid/bis(3-methyl-4-aminocyclohexyl)methane/omega-lauric lactam polycondensate, isophthalic acid/teraphthalic acid/hexamethylenediamine polycondensate, isophthalic acid/2,2, 4-trimethylhexamethylenediamine/2,4,4-trimethylhexamethylene diamine polycondensate, isophthalic acid/terephthalic acid/2,2,4-trimethylhexamethyleendiamine/2,4,4-trimethylhexamethylenediamine polycondensate, terephthalic acid/bis(3-methyl-4-aminocyclohexyl)methane/epsilon-caprolactam polycondensate. Included are polycondensates wherein which a benzene ring of a terephthalic acid component and/or an isophthalic acid component forming part of these polycondensates has been replaced by an alkyl group or a hydrogen atom. Mixtures of two or more types of said non-crystalline polyamides can also be applied. It is preferred to apply isophthalic acid/terepthalic acid/hexamethylenediamine/bis(3-methyl-4-aminocyclohexyl)methane polycondensate, isophthalic acid/teraphthalic acid/hexamethylenediamine polycondensate, and terephthalic acid/bis(3-methyl-4-aminocyclohexyl)methane/epsilon-caprolactam polycondensate.

The composition contains between 5 and 60 parts by weight of a reinforcing material, preferably between 10 and 50 parts by weight. Suitable reinforcing materials are for example an inorganic filler or an organic or inorganic fibre. A suitable filler or fibre are the materials known to one skilled in the art, for example glass fibres, metal fibres, graphite fibres, aramid fibres, glass globules, aluminium silicates, asbestos, mica, clay, calcined clay and talc and mixtures of two or more of these materials. Preferably at least glass fibres are present in the composition according to the invention.

The composition comprises 0.05 to 4 parts by weight of at least one organic UV stabiliser from the class of hindered amines (Hindered Amine (Light) Stabilisers), preferably 0.15 to 1.5 parts by weight. A(n) (organic) UV stabiliser is understood to be a(n) (organic) substance whose presence in the composition imparts improved resistance to the effects of weather conditions, in particular of UV radiation. This enhances the applicability of objects made from the composition for outdoor use, in particular in vehicle components.

Suitable organic UV stabilisers from the class of hindered amines (HALS or HAS) for application in the composition according to the invention are for example HALS/HAS compounds derived from a substituted piperidine compound, in particular any compound which is derived from an alkyl-substituted piperidinyl or piperazinone compound, and substituted alkoxy peridinyl compounds. Examples of such compounds are:
- 2,2,6,6-tetramethyl-4-piperidinone;
- 2,2,6,6-tetramethyl-4-piperidinol;
- bis-(2,2,6,6-tetramethyl-4-piperidinyl)-sebacate (Tinuvin® 770);
- mixtures of esters of 2,2,6,6-tetramethyl-4-piperidinol and fatty acids (Cyasorb® UV 3853);
- bis-(2,2,6,6-tetramethyl-4-piperidinyl)-succinate (Tinuvin® 780);
- bis-(1-octyloxy-2,2,6,6-tetramethyl-4-piperidinyl)-sebacate (Tinuvin® 123);
- bis-(1,2,2,6,6-pentamethyl-4-piperidinyl)-sebacate (Tinuvin® 765);
- tetrakis-(2,2,6,6-tetramethyf-4-piperidyl)-1,2,3,4-butane-tetracarboxylate;
- N-butyl-2,2,6,6-tetramethyl-4-piperidinamine;
- N,N '-bis-(2,2,6,6-tetramethyl-4-piperidyl)-hexane-1,6-diamine;
- 2.2 '-[(2.2.6.6-tetramethyl-4-piperidinyl)-imino]-bis-[ethanol];
- 5-(2.2.6.6-tetramethyl-4-piperidinyl)-2-cyclo-undecyl-oxazole) (Hostavin® N20);
- mixture of: 2,2,4,4 tetramethyl-21-oxo-7-oxa-3.20-diazadispiro[5.1.11.2]-heneicosane-20-propionic acid dodecylester and 2.2.4.4 tetramethyl-21-oxo-7-oxa-3,20-diazadispiro[5,1,11,2]-heneicosane-20-propionic acid tetradecyl ester (Hostavin® N24);
- diacetam® 5 (CAS registration number: 76505-58-3)
- propanedioic acid, [(4-methoxyphenyl)methylene]-,bis(1,2,2,6,6-pentamethyl-4-piperidinyl) ester (Sanduvor® PR 31);
- 1,3-benzendicarboxamide,N,N'-bis(2,2,6,6-tetramethyl-4-piperidinyl) (Nylostab® S-EED);
- 3-dodecyl-1-(2,2,6,6-tetramethyl-4-piperidyl)-pyrolidin-2,5-dione (Cyasorb® UV3581);
- formamide, N,N'-1,6-hexanediylbis[N-(2,2,6,6-tetramethyl-4-piperidinyl (Uvinul® 4050H);
- 3-dodecyl-1-(1 ,2,2,6,6-pentamethyl-4-piperidyl)-pyrrolidin-2,5-dione (Cyasorb® UV-3641);
- 1,5-Dioxaspiro (5,5) undecane 3,3-dicarboxylic acid, bis (2,2,6,6-tetramethyl-4-peridinyl) ester (Cyasorb® UV-500);
- 1,5-Dioxaspiro (5,5) undecane 3,3-dicarboxylic acid, bis (1,2,2,6,6-pentamethyl-4-peridinyl) ester (Cyasorb® UV-516);
- bis(1,2,2,6,6-pentamethyl-4-piperidinyl)(3,5-di-t-butyl-4-hydroxybenzyl)-butylpropanedioate (Tinuvin® 144);
- tetrakis-(1,2,2,6,6-penta-methyl-4-piperidyl)-1,2,3,4-butane-tetra-carboxylate (ADK STAB LA-52);
- 1,2,3,4-butanetetracarboxylic acid, tetrakis(2,2,6,6-tetramethyl-4-piperidinyl) ester (ADK STAB LA-57);
- 1,2,3,4-butane-tetracarboxylic acid-1,2,3-tris(1,2,2,6,6-pentamethyl-4-piperidinyl)-4-tridecylester (ADK STAB LA-62);
- 8-acetyl-3-dodecyl-7,7,9,9-tetramethyl-1,3,8-triazaspiro(4,5)decane-2,4-dione (Tinuvin® 440);
- N-2,2,6,6-tetrametyl-4-piperidinyl-N-amino-oxamide (Luchem® HAR1 00);
- 4-acryloyloxy-1,2,2,6,6-pentamethyl-4-piperidine;
- 1,5,8,12-tetrakis[2 ',4'-bis(1",2",2",6",6"-pentamethyl-4"-piperidinyl(butyl)amino)-1',3',5'-triazin-6'-yl]-1,5,8,12-tetraazadodecane;
- 1,1 '-(1,2-ethane-di-yl)-bis-(3,3',5,5'-tetra-methyl-piperazinone) (Goodrite® 3034);
- propane amide, 2-methyl-N-(2,2,6,6-tetramethyl-4-piperidinyl)-2-[(2,2,6,6-tetramethyl-4-piperidinyl)amino] (Sumisorb® TM-061)
- oligomer of N-(2-hydroxyethyl)-2,2,6,6-tetramethyl-4-piperidinol and succinic acid (Tinuvin® 622);
- poly[[6-[(1,1,3,3-tetramethylbutyl)amino]-s-triazine-2,4-diyl][2,2,6,6-tetramethyl-4-piperidinyl)imino]hexamethylene[(2,2,6,6-tetramethyl-4-piperidinyl)imino]] (Chimassorb® 944);
- poly[(6-morfoline-S-triazine-2.4-diyl)[(2.2.6.6-tetramethyl-4-piperidinyl)-imino]hexamethylene-[(2.2.6.6-tetramethyl-4-piperidinyl)-imino]] (Cyasorb® UV-3346);
- poly[(6-morpholino-s-triazine-2.4-diyl)[1.2.2.6.6-penta-methyl-4-piperidyl)imino]-hexamethylene[(2,2,6,6 tetra-methyl-4-piperidyl)imino]] (Cyasorb® UV-3529);
- poly methylpropyl-3-oxy-[4(2.2.6.6-tetrametyl)-piperidinyl)]-siloxane (Uvasil® 299);
- copolymer of α-methylstyrene and n-(2.2.6.6-tetramethyl-piperidinyl)-4-maleimide and N-stearyl-maleimide (Lowilite® 62);
- 1,2,3,4-butane tetracarboxylic acid, polymer with β, β, β', β'-tetramethyl-2,4,8,10-tetraoxaspiro[5,5]undecane-3,9-diethanol, 1,2,2,6,6-pentamethyl-4-piperidinyl ester (Mark® LA63);
- 1,2,3,4-butanetetracarboxylic acid, polymer with β, β, β', β'-tetramethyl-2,4,8,10-tetraoxaspiro[5,5]undecane-3,9-diethanol, 2,2,6,6-tetramethyl-4-piperidinyl ester (Mark® LA68);
- oligomer of 7-Oxa-3,20-diazadispiro[5,1,11,2]heneicosan-21-one,2,2,4,4-tetramethyl-20-(oxiranylmethyl) (Hostavin® N30);
- 1,3,5-Triazine-2,4,6-triamine, N,N'''-[1,2-ethanediylbis [[[4,6-bis[butyl(1,2,2,6,6-pentamethyl-4-iperidinyl)amino]-1,3,5-triazine-2-yl]imino]-3,1-propanediyl]]-bis[N'.N"-dibutyl-N'.N"-bis(1.2.2.6.6-pentamethyl-4-piperidinyl) (Chimassorb® 119);
- 1.3-Propanediamine, N,N-1,2-ethanediylbis-,polymer with 2,4,6-trichloro-1,3,5-triazine, reaction products with N-butyl-2,2,6,6-tetramethyl-4-piperidinamine (Uvasorb® HA88);
- 1.6-Hexanediamine, N, N'-bis(2,2,6,6-tetramethyl-4piperidinyl)-polymer with 2,4,6-trichloro-1,3,5-triazine, reaction products with N-butyl-1-butanamine and N-butyl-2,2,6,6-tetramethyl-4-piperidinamine (Chimassorb® 2020);
- 2,9,11,13,15,22,24,26,27,28-Decaazatricyclo[21,3,1,110,14]octacosa-1(27),10,12,14(28),23,25-hexaene-12,25-diamine,N,N'-bis(1,1,3,3-tetramethylbutyl)-2,9,15,22-tetrakis(2,2,6,6-tetramethyl-4-piperidinyl)-(Chimassorb® 966)
- 1,1',1"-(1,3,5-Triazine-2,4,6-triyltris ((cyclohexylimino)-2,1-ethanediyl)tris(3,3,5,5-tetramethylpiperazinone); (Goodrite® 3150);
- 1,1',1"-(1,3,5-Triazine-2,4,6-triyltris((cyclohexylimino)-2,1-ethanediyl)tris(3,3,4,5,5-tetramethylpiperazinone) (Goodrite® 3159);
- Tinuvin® NOR 371 ;
- Uvinul® 5050H.

Surprisingly it has been found that in case organic UV stabiliser as described above is present in the composition, the presence of the relatively large primary carbon black particles of at least 30 nm on average leads to the desired improvement of the resistance to weather influences with better results than when smaller primary carbon black particles are applied. This is all the more surprising because in a composition in which no organic UV stabiliser is present carbon black with an average primary particle size smaller than 30 nm imparts precisely better UV resistance than carbon black with an average primary particle size larger than 30 nm.

The composition contains 0.1 to 5 parts by weight, preferably 0.25 to 2.5 parts by weight of carbon black with an average primary particle size of at least 30 nm. Preferably, the average size is at least 40 and most preferably at least 50 nm. Preferably, 150 nm and more preferably 120 nm is chosen as the upper limit for the average particle size. If the average primary particle size of the carbon black is outside the said limits, the effect of the invention does not occur or occurs only to a lesser extent. Types of carbon black that comply with the above-mentioned requirements are for example Black Pearls 120 (75 nm), Elftex 120 (60 nm), both from Cabot, and Printex 25 (56 nm), Printex 12 (75 nm) and Flammruss 101 (95 nm), all from Degussa. The numbers in brackets indicate the average primary particle size.

In addition to the organic UV stabiliser(s) from the class of hindered amine compounds (HALS or HAS) preferably also one or more organic stabilisers from the class of UV absorbers are present in the composition in a quantity of 0.05 to 4 parts by weight, preferably in a quantity of 0.1 to 2.5 parts by weight . The presence of this UV absorber in combination with the organic stabiliser(s) from the class of hindered amines provides a synergistic improvement in the resistance to the effects of weather influences, in particular of UV radiation. Examples of organic UV absorbers are benzotriazoles, benzophenones, triazines, phenyl salicylates, anilides and cyanoacrylates.

Preferably 2-(2 '-hydroxy-3',5 '-di-t-butyl-phenyl)-benzotriazole (Tinuvin® 320); 2-(2 '-hydroxy-3 '-t-butyl-5'-methylphenyl)-5-chlorobenzotriazole (Tinuvin®326); 2-(3 ',5 '-di-t-butyl-2 '-hydroxyphenyl)-5-chlorobenzotriazole (Tinuvin®327); 2-(2 '-hydroxy-3 ',5 '-di-t-amyl-phenyl)-benzotriazole (Tinuvin® 328, Cyasorb® UV-2337); 2-(2 '-hydroxy-5'-methyl-phenyl)-benzotriazole (Tinuvin® p);; 2-(2-hydroxy-5-t-octylphenyl)-benzotriazole (Tinuvin® 329, Cyasorb® UV-5411); benzene propanoic acid, 3-(2H-benzotriazole-2-yl)-5-(1,1-dimethylethyl)-4-hydroxy-1,6-hexanediylester (Tinuvin® 840); phenol, 2-(2H-benzotriazol-2-yl)-4-(1,1-dimethylethyl)-6-(2-methylpropyl) (Tinuvin® 350); bis[2-hydroxy-5t-octyl-3-(benzotriazol-2-yl)phenyl]methane (Tinuvin® 360); 2-[2-hydroxy-3,5-di(1,1-dimethylbenzyl)phenyl]2H-benzotriazole (Tinuvin® 234); bis[2-hydroxy-5-methyl-3-(benzotriazol-2-yl)phenyl]methane (Mixxim® BB/200); 2-hydroxy-4-(octyloxy) benzophenone (Cyasorb® UV-531); 2-[4,6-diphenyl-1,3,5-triazin-2-yl]-5-(hexyl)oxy-phenol (Tinuvin® 1577); 2-[4,6-bis(2,4-dimethylphenyl)-1,3,5-triazin-2-yl]-5-(octyloxy)phenol (Cyasorb® UV-1164); 2-ethoxy-5-t-butyl-2'-ethyl-oxalanilide (Tinuvin® 315, Sanduvor® EPU); 2-ethyl, 2'-ethoxy-oxalanilidth (Tinuvin® 312, Sanduvor® VSU); 2,2'-(1,4-phenylene)bis[4H-3,1-benzoxazin-4-one] (Cyasorb® UV-3638); propanedioic acid, [(4-methoxyphenyl)-methylene]-dimethylester (Hostavin® PR-25); tetra-ethyl-2,2'-(1,4 phenylene-dimethylidene)-bismalonate (Hostavin® B-CAP XP) are used.

Furthermore, in addition to the organic UV stabiliser(s) of the hindered amine class and organic UV absorber, if any, an inorganic UV absorber and/or inorganic UV screener may also form part of the composition. Inorganic pigments can fulfil this function.

Examples are titanium dioxide (the photochemically inactive form), zinc oxide, magnesium oxide and calcium carbonate.

The presence of these inorganic functional components in combination with the organic stabiliser of the HALS/HAS type can ensure a synergistic improvement in the resistance to the effects of weather influences, in particular of UV radiation.

The composition may also contain a small quantity of substances known as antioxidants. Such substances are known per se and are intended to counter deterioration as a result of the effects of for example heat, light and radicals thereby formed. Known antioxidants that can also be applied in the composition according to the invention are for example hindered phenols (phenolic antioxidants), copper salts and halogenides, preferably bromides and iodides, and mixtures of copper salts and halogenides, for example copper iodide/potassium iodide compositions and also phosphites, phosphonites, thioethers and hindered benzoates.

In addition to the specified components the composition may contain other components known to one skilled in the art such as polyamide compsitions such as release agents, flame retardants, impact strength improvers, blowing agents insofar as these do not adversely affect the desired properties attained by the combination of the presence of the specific carbon black and the organic UV stabiliser.

The composition according to the invention can be manufactured by techniques known per se for making compositions by mixing the components in a suitable sequence, for example in an extruder.

The composition according to the invention may be applied as an automobile part, for example as a door handle, mirror casing, roof railing, windscreenwiper arm and decorative parts and also as motor casing for lawnmowers and other covering parts in garden and agricultural machines.

The invention will be elucidated on the basis of the following examples, without being limited thereto.

In the examples and comparative experiments the materials stated in Table 1 were used. The indicated quantities are parts by weight.

**Table 1**

| Component | Type | Trading name and specification |
|---|---|---|
| Polyamide | | K122 (Nylon 6) (® DSM) |
| reinforcing material | | CS173x-10c (® Owens Corning) |
| Stabilizers | UV stabilizer (HALS) | Tinuvin 770 (® CIBA) (a) |
| | UV absorber | Tinuvin 234 (® CIBA) (b) |
| antioxidants | Primary | Irganox 1098 (® CIBA) (a) |
| | Secondary | Irgafos 168 (® CIBA) (b) |
| Carbon black | | Flammruss 101 (® Degussa), primary-particle size 95 nm (a) |
| | | Printex Alpha, (® Degussa), primary particle size 20 nm (b) |
| Release agent | | Acrawax C |

### Example I and comparative experiments A-C

Compositions as specified in table 2 were compounded in a 30 mm ZSK extruder. The barrel temperature of the extruder was 260 °C, the speed was 200 rpm and the throughput was 17 kg/hour. Apart from the reinforcing material all ingredients were metered at the throat. The reinforcing material was added to the melt by lateral metering. The carbon black was metered by means of a masterbatch (20 mass% carbon black, 80 mass% polyamide 6).

The compounded material, in the form of a strand, was cooled and chopped to granulate. This granulate was then dried in vacuo for 24 hours at 80 °C.

Textured sheets (Texture: N114) were injection moulded from the granulate using an injection moulding machine (Stork 300, screw diameter 52 mm). The barrel temperature of the injection moulding machine was 285 °C, the mould temperature was 80 °C.

The obtained injection moulded sheets were subjected to an accelerated ageing test according to ISO 4892-2 in a model Ci65A Weather-Ometer with the following settings being used:

| | |
|---|---|
| -Black panel temperature (°C): | 70 |
| -Radiation intensity (340 nm) (W/m²/nm): | 0,55 |
| -Wetting cycle (dry/wet) (min/min): | 102/18 |
| -Relative humidity (end of dry period) (%): | 50 |
| -Continuous exposure. | |

The ageing process was monitored by instrumented colour measurement of the exposed sheets (delta E) according to DIN 5033 (CIE Lab, D65, 10°, 45/0).
The ageing results are also shown in table 2.

**Table 2**

| Component/Type | Type | Example I | Comparative Experiment A | Comparative Experiment B | Comparative Experiment C |
|---|---|---|---|---|---|
| Polyamide | K122 | 69 | 69 | 70 | 70 |
| Reinforcing material | CS173-10c | 31 | 31 | 30 | 30 |
| Stabilizers | (A) | 0.25 | 0.25 | - | - |
| | (B) | 0.25 | 0.25 | - | - |
| Antioxidants | (A) | 0.178 | 0.178 | - | - |
| | (B) | 0.178 | 0.178 | - | - |
| Carbon black | (A) | 0.77 | - | 0.76 | |
| | (B) | - | 0.77 | | 0.76 |
| Release agent | Acrawax C | 0.31 | 0.31 | 0.3 | 0.3 |
| Property | Delta E | 0.9 | 3.5 | - | - |
| | | (1500 h) | (1500 h) | | |
| | Delta E | | | 4.3 | 3.8 |
| | | - | - | (300 h) | (1200 h) |

Comparison of Example I with Comparative Experiment A indicates that the composition according to the invention has an unexpected and significantly improved weather stability and in particular UV stability. Comparison of Comparative Experiments B and C indicates that in compositions that do not contain hindered amine as an organic UV stabiliser carbon black with an average primary particle size smaller than 30 nm imparts better UV resistance than carbon black with a particle size larger than 30 nm.

## Claims

1. Reinforced polyamide composition stabilized against weather influences which contains:
(a) 40 to 95 parts by weight of polyamide at least 50 wt% of which is semicrystalline polyamide;
(b) 5 to 60 parts by weight of reinforcing material;
(c) 0,05 to 4 parts by weight of at least of one organic UV stabiliser from the class of hindered amines; and
(d) 0.1 to 5 parts by weight of carbon black with an average primary particle size of at least 30 nm.

2. Polyamide composition according to claim 1, which contains also 0.05 to 4 parts by weight of of an organic UV absorber.

3. Polyamide composition according to claim 1 or 2, which contains also 0.05 to 5 parts by weight of an inorganic UV absorber or UV screener.

4. Polyamide composition according to any one of claims 1-3, in which the semicrystalline polyamide is PA6, PA66, PA46 or a mixture thereof.

## Patentansprüche

1. Verstärkte, gegen Wettereinflüsse stabilisierte Polyamidzusammensetzung, die
(a) 40 bis 95 Gewichtsteile Polyamid, wovon mindestens 50 Gew.-% teilkristallin sind;
(b) 5 bis 60 Gewichtsteile Verstärkungsmaterial;
(c) 0,05 bis 4 Gewichtsteile mindestens eines organischen UV-Stabilisators aus der Klasse der gehinderten Amine und
(d) 0,1 bis 5 Gewichtsteile Ruß mit einer durchschnittlichen Primärteilchengröße von mindestens 30 nm
enthält.

2. Polyamidzusammensetzung nach Anspruch 1, die außerdem 0,05 bis 4 Gewichtsteile eines organischen UV-Absorbers enthält.

3. Polyamidzusammensetzung nach Anspruch 1 oder 2, die außerdem 0,05 bis 5 Gewichtsteile eines anorganischen UV-Absorbers oder UV-Screeners enthält.

4. Polyamidzusammensetzung nach einem der Ansprüche 1-3, worin es sich bei dem teilkristallinen Polyamid um PA-6, PA-66, PA-46 oder eine Mischung davon handelt.

## Revendications

1. Composition de polyamide reforcée, stabilisée vis-à-vis des influences atmosphériques, contenant :
(a) de 40 à 95 parties en poids de polyamide, dont au moins 50 % en poids est un polyamide semi-cristallin ;
(b) de 5 à 60 parties en poids d'une matière de renforcement ;
(c) de 0,05 à 4 parties en poids d'au moins un agent stabilisant aux UV organique parmi la classe des amines encombrées ; et
(d) de 0,1 à 5 parties en poids de noir de carbone présentant une granulométrie primaire moyenne d'au moins 30 nm.

2. Composition de polyamide selon la revendication 1, contenant également de 0,05 à 4 parties en poids d'un agent absorbant les UV organique.

3. Composition de polyamide selon la revendication 1 ou 2, contenant également de 0,05 à 5 parties en poids d'un agent absorbant les UV ou d'un écran contre les UV inorganique.

4. Composition de polyamide selon l'une quelconque des revendications 1 à 3, dans laquelle le polyamide semi-cristallin est du PA-6, du PA-66, du PA-46 ou un mélange de ceux-ci.
